# EUROPEAN PATENT APPLICATION

(11) **EP 0 631 900 A1**
(43) Date of publication of application: **04.01.1995**
(21) Application number: 94108076.4
(22) Date of filing: 26.05.1994
(51) Int. Cl.: B60N 2/22, F16B 17/00, B23P 11/00

(54) **Axial crimp connection for open planetary recliner**

(30) Priority: 27.05.1993 US 68476
(71) Applicant: NAUE/JOHNSON CONTROLS ENGINEERING GmbH & CO. KG, D-42929 Wermelskirchen (DE)
(72) Inventor: Hoge, Ralf, D-42477 Radevormwald (DE); Strenger, Martin, D-44793 Bochum (DE)
(74) Representative: Bergen, Klaus, Dipl.-Ing.

(57) **Abstract**

An assembly of a first member (34, 34') crimped to a second member (33) wherein said first member is mounted on said second member and includes a radially extending surface (54a) spaced from an opposing radially extending surface (41a) of said second member, especially a hinge pivot mechanism (21) preferably for reclinable vehicle seats includes an eccentric planetary gear system, having a gear wheel (31) and a gear ring (32) which are mounted on an eccentric pivot member (33) and located between axially spaced shoulder surfaces (41a, 54a) of the pivot member and a bushing (34) which is mounted on the pivot member, the pivot member having a shaft (43) with a pair of notches (45) located on opposite sides of the shaft and portions (59) of the sidewall of the bushing being pressed into the notches, forming a crimp connection between the bushing and the pivot member to maintain a predetermined axial spacing between the shoulder surfaces with the gear wheel contacted by one of the shoulder surfaces and the gear ring contacted by the other one of the shoulder surfaces to thereby maintain respective tooth systems (39,40) of the gear wheel and gear ring in operative relationship. Also disclosed is apparatus (60) for making the crimp connection between the bushing and the pivot member.

## Description

### Background of the Invention

This invention relates to assemblies, particularly to hinge pivot mechanisms for vehicle seat assemblies, having for example reclinable seat backs.

Various hinge mechanisms have been proposed for vehicle seat assemblies which have reclinable seat backs. One such hinge mechanism of the so-called "Taumel" type includes an eccentric planetary gear system having a gear wheel and a gear ring which are mounted on a pivot axle which includes an eccentric portion. The gear wheel is connected to a fixed hinge which is secured to the seat cushion frame. The gear ring is connected to a pivotable hinge which is secured to the seat back frame. When the pivot axle is rotated, relative movement is produced between the gear wheel and the gear ring so that the pivotable hinge pivots relative to the fixed hinge, adjusting the inclination of the seat back relative to the seat cushion.

A bushing, which is mounted on the distal end of the pivot axle, cooperates with the pivot axle to maintain the gear wheel and the gear ring in an operative relationship with one another. The bushing has a shoulder which is spaced axially from a shoulder of the pivot axle. The gear ring and the gear wheel are located between and in contact with the axially spaced shoulders of the pivot axle and the bushing. The bushing is a cap-like member which is received on the distal end of the pivot axle. The bushing is welded to the pivot axle at its distal end to maintain fixed the spacing between the shoulders, thereby maintaining a desired axial relationship between the gear wheel and the gear ring.

The axial relationship between the gear ring and gear wheel is critical to proper operation of the hinge assembly. Failure to maintain the proper axial relationship may result in lateral play in the seat back and permit tilting of the seat back during adjustment of the seat back position or under collision conditions. Because the bushing is welded to the pivot axle, the bushing must "cap" the distal end of the pivot axle so that its inner end surface is in contact with the end of the pivot axle to define a weld surface. This fixes the axial position of the bushing on the pivot axle. Consequently, the tolerance on the shoulder-to-shoulder spacing that is achievable for this type of connection in a hinge assembly is typically on the order of .33 mm.

A further disadvantage of this connection arrangement is that welding of the bushing to the pivot axle precludes surface hardening of the pivot axle. Surface hardening would increase the strength of the pivot axle. Moreover, the use of a weld to secure the bushing to the pivot axle requires that an additional shoulder be provided on the pivot axle for the sole purpose of securing the bushing to the pivot axle, requiring additional machining in producing the pivot axle.

In U.S. Patent no. 4,538,855, there is disclosed a recliner mechanism for a vehicle seat including a planetary gear system which couples a reclinable seat back to a seat cushion. The recliner mechanism includes a spur gear which is formed by punching from a fixed hinge and a gear rim which is formed by punching from a pivotable hinge. The spur gear and the gear rim are carried on a shaft having an eccentric portion. The shaft is rotatable by a drive including a handwheel which is secured to a pin. The pin is connected to the shaft by a crimp connection. However, the crimp connection only connects the drive to the driven shaft. There is no axial connection made between the gear rim and the spur gear by the crimp connection. The axial positioning of the mutually turnable hinges is established by pins which are riveted in the pivoting hinge with the head of the pins overlapping the peripheral edge the fixed hinge.

Other examples of vehicle seats hinge structures with eccentric planetary gear systems are disclosed in U.S. Patents 4,573,739; 4,708,392; and 4,275,924.

### Summary of the Invention

The present invention provides an improved hinge pivot mechanism for reclinable vehicle seats for coupling together a seat lower portion and a seat back portion of a vehicle seat assembly to permit adjustment of the inclination of the seat back portion relative to the seat lower portion. The hinge pivot mechanism includes first hinge means associated with one of the seat portions and second hinge means associated with the other seat portion. The first hinge means includes a gear wheel having an external tooth system and the second hinge means includes a gear ring having an internal tooth system.

A pivot assembly supports the gear wheel and the gear ring with their respective tooth systems in an operative relationship. The pivot assembly includes a pivot member and a bushing which is mounted on the pivot member. The bushing has an outwardly extending surface which is spaced axially from an outwardly extending surface of the pivot member. The gear wheel and the gear ring are mounted on the pivot member and located between the axially spaced surfaces of the bushing and the pivot member.

In accordance with the invention, the bushing is crimped to the pivot member to maintain a predetermined axial spacing between the two axially spaced surfaces with the gear wheel contacted by one of the axially spaced surfaces and the gear ring contacted by the other one of the axially spaced surfaces. In this manner, the bushing and the pivot member cooperate to maintain the respective tooth systems of the gear ring and the gear wheel in operative relationship.

In accordance with a disclosed embodiment, the pivot member has a pair of notches formed in a shaft portion at diametrically opposed positions. Sidewall portions of the bushing are pressed into the notches by a crimping apparatus provided by the present invention to form a crimp connection between the bushing and the pivot member. The crimping apparatus includes a support apparatus which supports the pivot member with the bushing mounted on the shaft of the pivot member. The support apparatus positions the bushing axially on the shaft of the pivot member to provide the desired axial spacing between the outwardly extending surfaces of the pivot member and the bushing with sidewall portions of the bushing overlying the notches in the pivot member. The force applied to the bushing maintains the gear wheel in contact with one of the surfaces and the gear ring in contact with the other one of the surfaces during the crimping operation. The crimping apparatus includes a pair of crimping dies which are driven into engagement with the sidewall of the bushing to press portions of the sidewall into the notches. The crimping dies are precisely indexed with the notches to ensure that the crimp connection is formed at the notches of the pivot member.

Securing the bushing to the pivot member with a crimp connection provides greater control in establishing the relative positioning between the gear wheel and the gear ring of the hinge pivot mechanism, enabling the gap between the two gear elements to be reliably and repeatedly established at a value as small as .05 mm., for example. Moreover, the crimp connection provides greater strength in the connection region and increased resistance to lateral tilting of the components of the hinge pivot mechanism both in use and under collision conditions. In addition, the crimp connection permits simplification of the configuration of the pivot member, enhancing production capabilities.

### Description of the Drawings

For the purpose of facilitating an understanding of the invention, there is illustrated in the accompanying drawings a preferred embodiment thereof, from an inspection of which, when considered in connection with the following description, the invention, its construction and operation, and many of its advantages will be readily understood and appreciated.
FIG. 1 is a vertical section view of a hinge assembly incorporating the hinge pivot mechanism provided by the present invention;
FIG. 2 is a side elevation view of the hinge assembly shown in FIG. 1;
FIG. 3 is a top plan view of the pivot member of the hinge pivot mechanism;
FIG. 4 is a side elevation view of the pivot member;
FIG. 5 is an end view of the pivot member;
FIG. 6 is a perspective view of the inboard bushing;
FIG. 7 is a side section view of the inboard bushing;
FIG. 8 is a top plan view of the outboard bushing;
FIG. 9 is a perspective view of the outboard bushing;
FIG. 10 is a transverse section view of the outboard bushing;
FIG. 11 is an enlarged fragmentary view of the pivot member and the bushing, illustrating the crimp connection;
FIG. 12 is a sectional view taken along line 12-12 of FIG. 11;
FIG. 13 is a simplified representation of crimping apparatus for making the crimp between the pivot member and the bushing;
FIG. 14 is a view of the support apparatus of the crimping apparatus;
FIG. 15 is an enlarged fragmentary view illustrating the crimping dies engaging the bushing sidewall during a crimping operation; and,
FIG. 16 is a perspective view of the tip of one of the crimping dies of the crimping apparatus.

### Description of a Preferred Embodiment

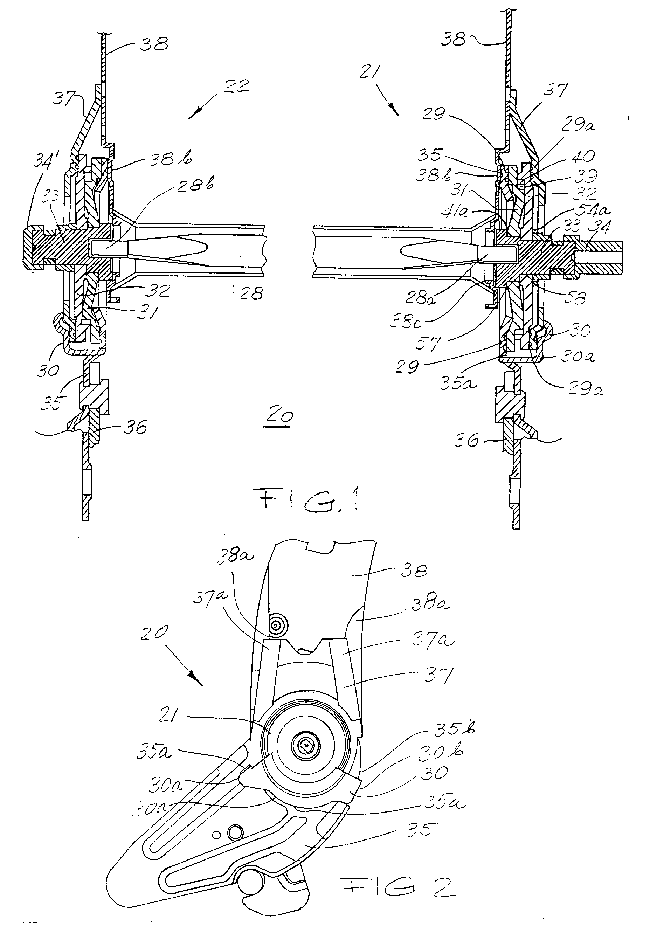

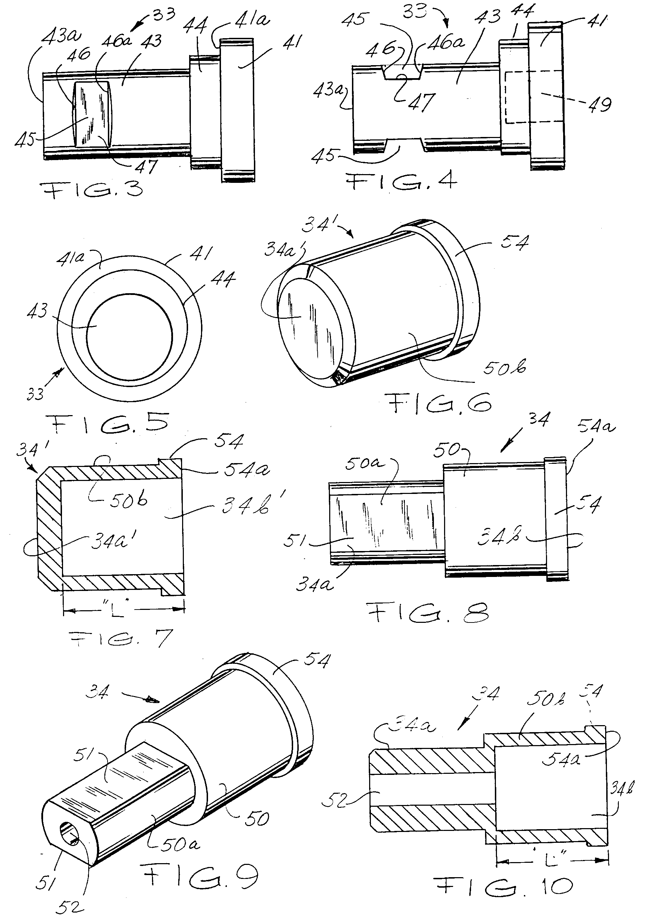

Referring to FIGS. 1 and 2 of the drawings, the hinge pivot mechanism provided by the present invention is incorporated into a hinge assembly 20 which pivotally connects the reclinable seat back of a vehicle seat to the stationary lower part of the seat. The hinge assembly 20 includes two such hinge pivot mechanisms. One hinge pivot mechanism 21 is located at the outboard side of the seat. The other hinge pivot mechanism 22 is located at the inboard side of the seat. The terminology "outboard" and "inboard" is used as a convenience to designate the sides of the vehicle seat. The two hinge pivot mechanisms are coupled together by a horizontally extending coupling shaft 28 having ends 28a and 28b. The outboard hinge pivot mechanism 21 includes a hand wheel, shown in phantom, for transmitting torque to the shaft 28 to rotate the shaft. The rotary movement imparted to the coupling shaft 28 is transmitted through the shaft to the hinge pivot mechanism 22 on the inboard side of the seat, which thus operates in unison with the outboard hinge pivot mechanism 21.

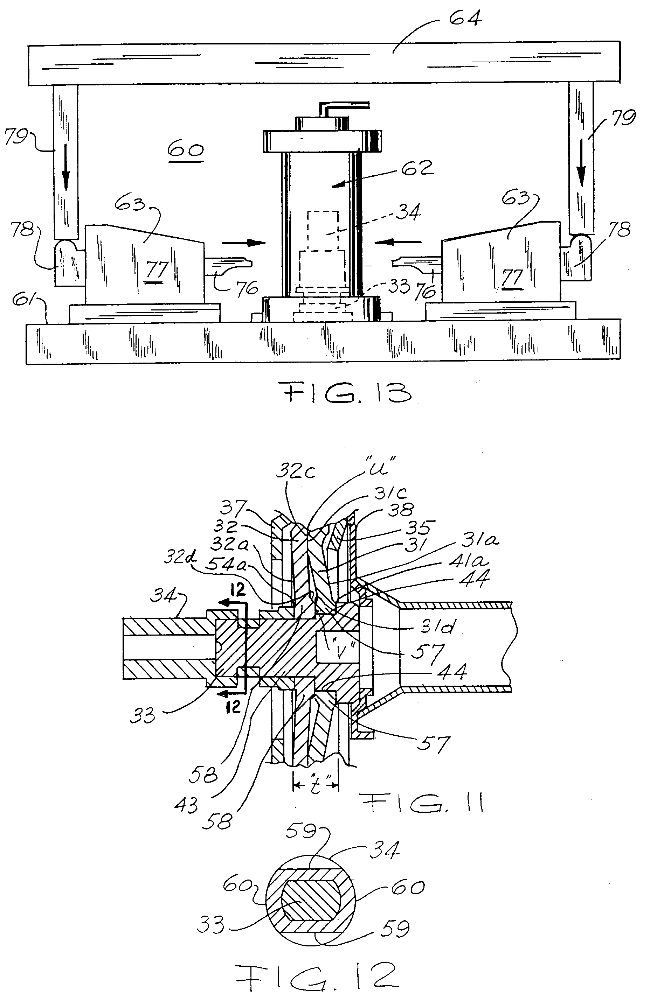

The hinge pivot mechanisms 21 and 22 each include an eccentric planetary gear system and are substantially identical to, but mirror images of one another. Accordingly, only the outboard hinge pivot mechanism 21 is described in detail, and like components and parts of hinge pivot mechanism 22 have been given the same reference numerals. However, the bushing of the inboard hinge pivot mechanism 22, shown in FIGS. 6 and 7, has been given the reference numeral 34'.

The hinge pivot mechanism 21 includes a gear wheel 31, a gear ring 32, an eccentric bearing pivot member 33 and a bushing 34. The gear wheel 31 is connected by welds 29 to a cushion adapter plate 35 which, in turn, is secured to a stationary lower portion 36 of the seat. The gear ring 32 is connected by welds 29a to a squab or seat back adaptor 37 which, in turn, is coupled to the squab or pivotable seat back 38. A bracket 30 secured to the cushion adapter plate 35 provides a bearing surface for the seat back adaptor 37 at its lower edge. The bracket 30 includes two legs 30a which are received in slots 35a in the cushion adapter plate 35 and a third leg 30b which engages a cutout side portion 35b of the cushion adapter plate 35. The bracket 30 is secured to the cushion adapter plate 35 in a suitable manner, such as by welding. The seat back adapter 37 has down turned edge portions 37a which define a pair of guide channels which engage edges 38a of the seat back portion 38 to couple the seat back to the hinge pivot mechanism. The seat back portion 38 has indentations, such as indentation 38b, which define contact areas which engage the seat cushion adapter plate 35. Three such indentations 38b are provided and are spaced apart circumferentially along the hub 38c of the seat portion 38.

The gear wheel 31 has an external tooth system 39 and the gear ring 32 has an internal tooth system 40 which meshes with the tooth system 39 of the gear wheel 31. The gear wheel 31 and the gear ring 32 are assembled together on the eccentric pivot member 33 in an operative relationship, forming an open planetary gear system of the so-called "Taumel" type. The pivot member 33 and the bushing 34 cooperate with one another to maintain the external tooth system of the gear wheel in an operative relationship with the internal tooth system of the gear ring. Relative rotation of the gear wheel 31 and the gear ring 32 provides relative pivoting movement between the seat back and the seat cushion, thereby adjusting the inclination of the seat back relative to the seat cushion. In the absence of such rotation, the tooth systems of the gear wheel and gear ring lock the two seat elements in relative orientation to which they have been adjusted.

The tooth system 40 of the gear ring 32 has at least one more tooth than the tooth system 39 of the gear wheel 31 so that the tip circle of the gear wheel 31 is smaller than the root circle of the gear ring 32 by the tooth height. The degree of eccentricity of the eccentric bearing region corresponds approximately to this difference, resulting in self-locking between the gear ring and the gear wheel in the manner known in the art.

Referring to FIGS. 3-5, the pivot member 33 is an elongated, generally cylindrical member having an annular head 41 and a generally cylindrical eccentric shaft 43. The head 41 is stepped down adjacent to the shaft 43, defining an annular shoulder 44 which is located adjacent to the eccentric shaft 43 and defines a shoulder surface 41a on the head 41 which extends outward radially. The shoulder 44 is concentric with the head 41. The pivot member 33 has a pair of open-ended channels or notches 45 formed in its shaft 43 near its distal end 43a. Each of the notches 45 is generally rectangular in transverse cross-section, having a pair of opposed, radially extending tapered side walls 46 and 46a and a flat bottom 47. The two notches 45 are disposed at diametrically opposed positions on the shaft 43 of the pivot member 33. The pivot member 33 has a counterbore 49 through its head 41 to receive one end 28a of the coupling shaft 28. The inner surface of the counterbore 49 has a serrated surface (not shown) which is frictionally engaged by a complementary serration on the end of the coupling shaft 28 to secure the shaft to the pivot member 33 and ensure that the shaft 28 rotates with the pivot member 33.

The pivot member 33 is formed by cold forging from any metal suitable for such process. The use of cold forging to produce the pivot member minimizes stress lines in the formed product. Consequently, the cold forged pivot member 33 is characterized by increased strength as compared to eccentric pivots formed using solely machining to produce the required shape. Moreover, because the bushing is secured to the pivot member by crimping rather than welding, this permits the pivot member to be surface hardened, further increasing the material strength of the pivot member. The pivot member is surface hardened to provide a surface hardness of a minimum of about 750 HV to a depth of about .1 mm. The notches 45 are formed in the pivot member 33 by cutting or by pressing, and preferably by pressing after the pivot member has been cold forged.

The bushing 34' of the inboard hinge pivot assembly 22 is shown in FIGS. 6-7 and the bushing 34 of the outboard hinge pivot assembly 21 is shown in FIGS. 8-10. Referring first to FIGS. 8-10, the bushing 34 is an elongated, generally cylindrical member having a shaft 50 with a stepped down portion 50a of reduced diameter at one end 34a. The shaft portion 50a includes a pair of flats 51 to facilitate mounting of the hand wheel on the bushing 34. Referring to FIG. 10, which is a transverse section view of the bushing 34, the bushing is countersunk at its other end 34b, defining a thin sidewall portion 50b of an enlarged inner diameter. The inner diameter of the countersunk end 34b of the bushing corresponds to the outer diameter of the pivot member shaft 43, permitting the bushing 34 to slide axially on the shaft 43 of the pivot member 34 of the outboard hinge pivot mechanism 21. The thin sidewall portion 50b terminates in a radial shoulder 54 which defines an outwardly extending shoulder surface 54a. The bushing 34 has a throughbore 52 for securing the hand wheel to the bushing 34.

The bushing 34 is formed by cold forging from any metal suitable for this process and may be surface hardened in the manner that the pivot member is surface hardened. Cold forging is used to produce a cylindrically shaped member having the through bore 52, the thin sidewall portion 50b and the shoulder 54. However, the flats 51 are formed on the shaft 50 of the cold forged member in a separate pressing operation. To alleviate the build up of material along the edge of the notches due to the pressing operation, the shaft may be formed with grooves (not shown), along each of the sides, at the top and the bottom of the cylindrical shaft portion, so that areas are provided into which the compressed material flows during the pressing operation carried out in forming the flats.

Referring now to FIGS. 6 and 7, the bushing 34' of the inboard hinge pivot assembly 22 is a cap-like member which is generally cylindrical in shape with a closed end 34a' and an open end 34b. The bushing 34 has a thin sidewall portion 50b which terminates in a shoulder 54 at open end 34b. The shoulder 54 defines an outwardly extending shoulder surface 54a. The inner diameter of the open end 34b corresponds to the outer diameter of the shaft 43 of pivot member 33, permitting the bushing 34' to slide axially on the shaft 43 of the pivot member 33. The bushing 34' is formed by cold forging and may be surface hardened.

Referring to FIGS. 3-10, in one realization of the hinge pivot mechanism 21, the pivot member 33 had a shaft diameter of 13.13 mm. The depth of each notch 45 was approximately 2 mm. and the axial length of each notch at the flat bottom surface 47 was approximately 5 mm. The distal edge 46 of each of the notches 45 was located approximately 4.5 mm. from the end 43a of the shaft. The inner diameter of the countersunk portion of the bushing 34 was approximately 13.13 mm. and the axial length "L" of the countersunk portion was 17 mm. The outer diameter of the bushing at shoulder 54 was approximately 18.5 mm. For the inboard hinge pivot mechanism 22, the bushing 34' had an inner diameter of 13.13 mm. and an axial length "L" of approximately 17 mm. The outer diameter of the bushing 34' at shoulder 54 was approximately 18.5 mm.

Referring to FIGS. 1 and 11, the gear wheel 31 and the gear ring 32 are mounted on the pivot member 33 with the pivot member 33 extending axially through respective bearing portions 57 and 58 of the gear wheel 31 and the gear ring 32. The gear wheel and the gear ring are located between the shoulder surfaces 41a and 54a. The gear wheel 31 is mounted on the pivot member with its bearing portion 57 located on the concentric shoulder portion 44 of the pivot member and with its outer surface 31a contacted by shoulder surface 41a. The gear ring 32 is mounted on the pivot member with its bearing portion 58 located on the eccentric shaft 43 of the pivot member 33 and with its outer surface 32a contacted by shoulder surface 54a of the bushing 34. The bushing 34 is mounted on the distal end of the pivot member 33 and is crimped thereto in a manner to be described, using the crimping apparatus provided by the present invention.

Referring to FIG. 11, the dimension "t" is the separation between the shoulder surface 41a and the shoulder surface 54a, and in one realization of the hinge pivot mechanism, this dimension was approximately 9 mm. The dimension "t" corresponds to the sum of the axial width of the bearing portion 57 of the gear wheel 31, the axial width of the bearing portion 58 of the gear ring 32 and a gap of approximately 0.05 mm between the gear wheel and the gear ring at their bearing portions 57 and 58. The setting of the dimension "t" also establishes the dimensions "u" and "v" which are shown in FIG. 11. Dimension "u" represents the spacing or gap between the gear wheel and the gear ring near their respective outer peripheral edges 31c and 32c. The dimension "v" represents the spacing or gap between the gear wheel and the gear ring at respective locations 31d and 32d intermediate their respective bearing portions and outer peripheral edges.

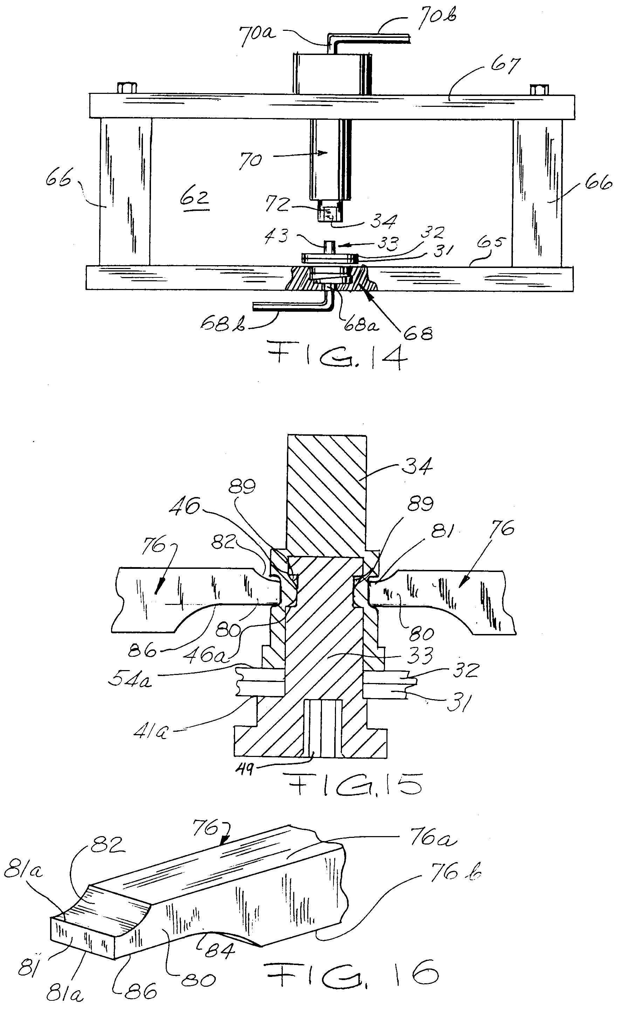

Referring to FIGS. 13 and 14, there is illustrated a simplified representation of crimping apparatus 60 for crimping the bushing 34 to the pivot member 33. The crimping apparatus 60 includes a base 61, a support apparatus 62, a pair of crimping tool assemblies 63, and a force actuator 64. The support apparatus 62, which is mounted on the base 61, positions the bushing 34 on the pivot member 33 prior to the crimping operation and supports the hinge pivot assembly during the crimping operation.

As shown in FIG. 14, the support apparatus 62, includes a base 65, a pair of uprights 66 and a cross member 67 which is supported by the uprights 66 in overlying relationship with the base 65. The uprights 66 may include an adjustment mechanism (not shown) to permit adjustment in the vertical height of the cross member 66 relative to the base 65. The support apparatus 62 includes a torque wrench mechanism having a lower portion 68 and an upper portion 70. The lower portion 68 of the torque apparatus includes a screw 68a which extends through a threaded aperture in the base 65. The lower end of the screw is bent over defining a handle 68b. The lower portion 68 of the torque apparatus supports the pivot member 33, oriented with its shaft 43 extending vertically upwards and with the gear wheel 31 and the gear ring 32 positioned on the shaft of the pivot member. The upper portion 70 of the torque wrench mechanism includes a screw 70a which extends through a threaded aperture in the cross member 67. The upper portion of the screw is bent over defining a handle 70b. The upper portion 70 of the torque mechanism is supported by the cross member 67 and includes a holder 72 which is axially aligned with the axis of the pivot member 33 and is movable along a vertical axis between extended and retracted positions. In the retracted position shown in FIG. 14, the holder 72 supports a bushing 34 to be crimped to a pivot member 33 above and in overlying relationship with the pivot member. In the extended position, the holder 72 locates the bushing in position on the shaft 43 of the pivot member.

Referring to FIG. 13, the crimping tool assemblies 63 are mounted on the base 61 and located at opposite sides of the support apparatus 62, which is shown in FIG. 13 oriented 90 degrees from its position in FIG. 14. Each of the crimping tool assemblies 63 includes a crimping die 76 and a force translation apparatus 77 having a force input lever 78. The crimping tool assembly 63 supports the crimping die 76 for horizontal reciprocating movement toward and away from the support apparatus 62. The force translation apparatus 77 converts a vertical force applied to the force input lever 78 by the force actuator 64 to a horizontal force which is applied to the crimping die 76, moving the crimping die horizontally towards the support apparatus 62. The force actuator 64 is adapted for reciprocating movement vertically relative to the crimping tool assemblies and has a pair of actuator arms 79 which are maintained in engagement with the pivotable force input levers 78 of the crimping tool assemblies. The force translation apparatus 77 includes suitable bias means for restoring the crimping dies 76 to the retracted or home position in the absence of a force on the force levers 78. Although in the simplified representation of the crimping apparatus the crimping dies are shown spaced away from the support apparatus, it is apparent that the tips of the crimping dies would be located adjacent to the support apparatus and that only a small length of travel would be required for the crimping dies during a crimping operation. The force actuator and force translation apparatus may comprise a hydraulic press in which the machine pressure controls the amount of travel of the crimping dies and the amount of force which is applied to the crimping dies during a crimping operation.

Referring to FIGS. 15 and 16, each crimping die 76 has upper surface 76a, lower surface 76b and a narrow forwardly projecting blunt tip 80. The tip 80 of each crimping die 76 has rectangular end surface 81 and an arcuate upper surface 82, which tapers inwardly from the upper surface 76 to the end surface 81. The lower portion 84 of the tip 80 includes a planar surface portion 86 which is merged with the lower surface b of the crimping die by an arcuate section 88. The ends 81 of the crimping dies have the same shape as the notches 45 in the shaft of the pivot member. The transverse width of the tip 80 is approximately the same as the width of the notch 45. However, the width of the notch 45 from sidewall 46 to sidewall 46a is larger than the vertical height of the end surface 81 of the crimping dies 76. For example, the vertical height of the end surface 81 may be 4 mm. whereas the width of the notch between sidewalls 46 and 46a is approximately 5 mm. in the exemplary embodiment.

Referring to FIGS. 13-15, in use of the crimping apparatus 60, the subassembly of a pivot member 33, a gear wheel 31 and a gear ring 32, is placed on the lower portion 68 of the torque wrench mechanism. A bushing 34 is placed in the holder 72 of the upper portion 70 of the torque wrench mechanism. Then, the handle 70b is rotated, turning the screw 70a which moves the holder 72 vertically downward to position the bushing on the shaft 43 of the pivot member 33 and with the shoulder surface 54a of the shoulder 54 of the bushing in contact with the outer surface 32a of the gear ring 32. Then, an axial force is applied to the hinge pivot assembly by turning handle 70b until resistance is encountered when the gear ring and the gear wheel 31, which are sandwiches between the opposing shoulder surfaces 41a and 54a, are pressed into firm engagement with one another. Support 68, which is movable by turning handle 68b, is used in initial set up of the apparatus or the support 68 may be fixed in place.

Then, screw 70a is rotated slightly in the reverse direction to back off on the force being applied to the hinge pivot mechanism. The axial spacing between the opposing shoulder surfaces 41a and 54a is measured while the torque is being lessened. The screw is rotated until a gap correponding to the desired axial spacing "t" (FIG. 11) is provided between the shoulder surfaces 41a and 54a, thereby establishing the desired operating relationship between the gear ring and the gear wheel. Support apparatus 62 maintains this shoulder surface to shoulder surface spacing during the crimping operation. Although in the exemplary embodiment the gap setting function is described as a manual process, this function could be carried out in an automated manner using appropriate force sensors to indicate when firm contact is established between the gear wheel and the gear ring and to back off sufficiently to establish the spacing desired between the opposing shoulder surfaces of pivot member 33 and bushing.

Then, the force actuator 64 is depressed, moving the actuator arms 79 downwardly, pivoting the force input levers 77. The force translation apparatus 77 translates the vertical movement of the actuating arms into horizontal movement to drive the crimping dies 76 horizontally outwardly into engagement with the bushing 34. The two crimping dies 76 are located in opposing relation to produce offsetting forces as they are driven into engagement with the assembled bushing 34 and pivot member 33. The force translation apparatus 77 maintains the tips 80 of the crimping dies 76 in alignment with the notches 45 in the pivot member 33 so that as the two crimping dies 76 are driven outwardly and engage the sidewall of the bushing 34, equal and opposite forces are applied to the sidewall of the bushing normal to the axis of the pivot member and at diametrically opposed positions, pressing the bushing sidewall material into the notches 45. The amount of force that is applied to the sidewall portions of the bushing engaged by the crimping dies 76 is set by the force actuator 64. In addition, the base 65 of the support apparatus 62 is mounted in a track or channel 61a in the base 61 to enable the support apparatus to be movable laterally, as viewed in FIG. 13, relative to the crimping dies 76. Accordingly, if either one of the crimping dies engages the bushing before the other crimping die, the support apparatus will be moved laterally slightly toward the other crimping die until the bushing is "centered" between the opposing crimping dies. This ensures that equal and opposite forces will be applied to the bushing sidewalls during each crimping operation.

Referring to FIG. 15, the crimping die produces a crimp between the bushing and the pivot member in a controlled manner. The front lower edge 81a of the tip 80 is aligned with the lower sidewall 46a of the notch, as viewed in FIG. 15. However, the front upper edge 81b is located about 1 mm. below the upper sidewall 46 because of the relative sizes of the tip 80 and the notch. Thus, the shape of the tip 80 of the crimping die 76 and its position relative to the notch causes the sidewall material of the bushing 34 to be pushed into the notches 45 of the pivot member 33 in a nonlinear manner with a "sweeping" type motion. That is, sidewall material is pushed into the notch 45 initially at the lower side 46a of the notch, as viewed in FIG. 15. Then, gradually sidewall material is pushed into the notch towards upper side 46 of the notch in a sweeping motion as the curved upper surface 82 of the tip is moved into the upper portion of the sidewall material that is in line with the upper sidewall 46 of the notch. In this way, the maximum force exerted on the sidewall material is offset relative to the center line of the notch 45. Although the sidewall material forced into the notch substantially fills the notch, there is a small void 89 near the upper side 46 of the notch, as is illustrated in FIG. 15. This void 89 is shown only in FIG. 15 which is an enlarged fragmentary view, but such void is provided also in the crimp connections shown in FIGS. 1 and 11, for example. The crimping action causes the sidewall portions of the bushing at the notches to be "squared off' so that as shown in FIG. 12, which illustrates the cross section of the bushing at the notches 45, the upper and lower surface portions 59 of the bushing become flattened as the result of the crimping operation, but the side surface portions 60 interconnecting the flat upper and lower surface portions 59, remain generally arcuate.

Thus, it can be seen that the present invention provides a hinge pivot mechanism for reclinable vehicle seats including a novel arrangement for connecting an eccentric pivot member to a bushing in a manner so as to more precisely establish an operative relationship for the respective tooth systems of a gear ring and a gear wheel of the hinge pivot mechanism. In accordance with the invention, the bushing is crimped to the pivot member to maintain a predetermined axial spacing between axially spaced surfaces of the pivot member and the bushing, thereby setting the axial spacing between the gear wheel and the gear ring of the hinge pivot mechanism. Securing the bushing to the pivot member with a crimp connection provides greater control in establishing the relative positioning between the gear wheel and the gear ring of the hinge pivot mechanism, enabling the gap between the two gear elements to be reliably and repeatedly established at a value as small as .05 mm., for example.

The crimp connection formed between the bushing and the pivot member permits optimum contact to be maintained between the engaging surfaces of the gear wheel and the gear ring during pivoting of the gear ring during operation of the hinge pivot mechanism. This prevents undesirable relative movement between the elements of the hinge pivot mechanism which form the eccentric planetary gear system. This arrangement provides more control over axial spacing between the two gear elements. Moreover, the axial spacing can be changed relatively simply by changing the size and/or location of the notches. In addition, it has been demonstrated by testing that the crimp connection affords greater axial strength and substantially prevents lateral "tilting" of the seat back both in normal use and under impact conditions. Moreover, this method of connection is simpler to achieve on conventional assembly lines than is a welding approach because the latter places certain constraints on the connection process.

## Claims

1. An assembly of a first member (34, 34') crimped to a second member (33) wherein said first member is mounted on said second member and includes a radially extending surface (54a) spaced from an opposing radially extending surface (41a) of said second member, characterized in that said second member includes at least one notch (45) in a surface thereof, and a portion (50b) of said first member is pressed into said notch, thereby crimping said second member to said first member to maintain a predetermined axial spacing between said opposing surfaces of said first and second members.

2. The assembly according to claim 1, characterized in that said second member includes first and second notches (45) in a surface thereof, and first and second portions of said first member are pressed into said first and second notches, respectively, for crimping said second member to said first member.

3. The assembly according to claim 2, characterized in that said second member includes a generally cylindrical shaft portion (43) and said first and second notches are formed in said shaft portion at diametrically opposed positions, and in that said first member has a thin cylindrical sidewall (50b), and first and second portions of said sidewall are pressed into said first and second notches, respectively.

4. The assembly according to claim 2 or 3, characterized in that said first and second notches are generally rectangular in transverse cross section, said first and second notches having first and second opposing sides and being open ended.

5. The assembly according to claim 1, characterized in that the assembly is used in a hinge pivot mechanism (21, 22) in particularly seat adjusters and/or for coupling together a seat lower portion and a seat back portion of a vehicle seat assembly for crimping a bushing (34, 34') to a pivot member (33) to maintain a predetermined axial spacing between opposing radially extending surfaces (54a, 41a) of the bushing and the pivot member, thereby maintaining the respective tooth systems (39, 40) of a gear wheel (31) and a gear ring (32) of the hinge pivot mechanism, which are located between the opposing surfaces of the bushing and the pivot member, in an operative relationship with one another.

6. Apparatus (60) for crimping a first member (34,34') to a second member (33) to maintain a predetermined axial spacing between opposing radially extending surfaces (54a, 41a) of the first and second members, wherein said first member includes a hollow cylindrical portion with first and second sidewall portions (50b) and said second member includes a cylindrical shaft portion (43) having first and second notches (45) located at diametrically opposed positions on said shaft portion, characterized by support means (62) for supporting said first and second members with said first and second sidewall portions of said first member located in overlying relationship with said first and second notches, respectively, of said second member and with said predetermined axial spacing between said radially extending surfaces of said first and second members, first and second crimping dies (76), each of said crimping dies having a tip portion (80), means (77) for locating said first and second crimping dies at opposite sides of said support means and with said tip portions aligned with said first and second notches of said second member, advancing means (14) for advancing said first and second crimping dies to cause said tip portions to engage, substantially simultaneously, said first and second sidewall portions, respectively, of said first member with equal and opposite forces, thereby pressing said first and second sidewall portions of said first member into said first and second notches, respectively, to form a crimp connection between said first and second members.

7. Apparatus according to claim 6, wherein the shape of said tip portions corresponds substantially to the shape of said notches.

8. Apparatus according to claims 6 and 7, wherein said tip portions are smaller than said notches.

9. Apparatus according to claims 6 and 7, wherein each notch has parallel first and second sidewalls (46, 46a), and wherein said tip portions of said crimping dies are shaped to cause said sidewall portion of said first member to be pressed into said notch initially at said first sidewall of said notch and subsequently to be pressed into said notch at said second sidewall in response to further advancement of said crimping dies.

10. Apparatus according to claims 6 and 7, wherein each notch is generally rectangular in shape and each of said tip portions is generally rectangular in shape.

11. Apparatus according to claim 6, wherein said support means includes means (70) for applying an axial force to said assembly to establish and maintain said predetermined axial relationship between said radially extending surfaces during the crimping operation.

12. A method for connecting a first member (34, 34') to a second member (33) to maintain a predetermined axial spacing between opposing radially extending surfaces (54a, 41a) of the first and second members, wherein said first member includes a hollow cylindrical portion having a sidewall portion (50b) and said second member includes a cylindrical shaft portion (43), and wherein said first and second members are supported with said sidewall portion of said first member located in overlying relationship with said shaft portion of said second member, characterized by providing first and second notches (45) in said cylindrical shaft portion (43) of said second member, which are located at diametrically opposed positions on said shaft portion, supporting said first and second members with said first and second sidewall portions (50b) of said first member located in overlying relationship with said first and second notches, respectively, of said second member and with said predetermined axial spacing between said radially extending surfaces (54a, 41a) of said first and second members, locating first and second crimping dies, each having a tip portion (80), at opposite sides of said support means, with said tip portions being aligned with said first and second notches of said second member, and advancing said first and second crimping dies to cause said tip portions to engage, substantially simultaneously, said first and second sidewall portions, respectively, of said first member with equal and opposite forces, thereby pressing said first and second sidewall portions of said first member into said first and second notches, respectively, to form a crimp connection between said first and second members.
